# EUROPÄISCHE PATENTSCHRIFT

(11) **EP 3 460 284 B1**
(45) Veröffentlichungstag und Bekanntmachung des Hinweises auf die Patenterteilung: **10.06.2020**
(21) Anmeldenummer: 18193502.4
(22) Anmeldetag: 10.09.2018
(51) Int. Cl.: F16F 9/04, F16F 1/40

(54) **ELASTOMER-METALL-LAGER ALS LAGERBAUTEIL MIT BAUTEILINTEGRIERTEM ELASTOMERMATERIAL-BRANDSCHUTZ UND SCHIENENFAHRZEUG**
ELASTOMER-METAL BEARING AS BEARING COMPONENT WITH INTEGRATED ELASTOMER MATERIAL FIRE PROTECTION AND RAILWAY VEHICLE
PALIER ÉLASTOMÈRE-MÉTAL EN TANT QUE COMPOSANT DE PALIER À PROTECTION CONTRE L'INCENDIE DE MATIÈRE ÉLASTOMÈRE INTÉGRÉE AU COMPOSANT ET VÉHICULE FERROVIAIRE

(30) Priorität: 25.09.2017 DE 102017008926
(43) Veröffentlichungstag der Anmeldung: 27.03.2019
(73) Patentinhaber: Jörn GmbH, 71336 Waiblingen (DE)
(72) Erfinder: Pohl, Stefan, 71336 Waiblingen (DE); Lippke, Oliver, 71686 Remseck (DE); Schiebel, Michael, 74535 Mainhardt (DE)
(74) Vertreter: Liebl, Thomas

(56) Entgegenhaltungen:
- EP-A1- 2 196 492
- DE-A1-102013 017 570
- DE-A1-102013 017 571
- DE-A1-102015 217 881
- JP-A- 2007 278 398

## Beschreibung

Die Erfindung betrifft ein Elastomer-Metall-Lager als Lagerbauteil mit bauteilintegriertem Elastomermaterial-Brandschutz nach dem Oberbegriff des Anspruchs 1 sowie ein Schienenfahrzeug mit einem Elastomer-Metall-Lager nach dem Oberbegriff des Anspruchs 11.

Bei Elastomer-Metall-Lagern ist das Elastomermaterial, insbesondere als Gummimaterial bei Hitzeeinwirkung brennbar. Im Brandfall im Nahbereich solcher Elastomer-Metall-Lager können daher Personen beeinträchtigt werden, wobei einen wesentlichen Einfluss hierauf die Brennbarkeit, die Entzündbarkeit und das Brandverhalten des Elastomermaterials sowie gegebenenfalls eine Rauchentwicklung und eine Toxizität des Rauchgases haben.

Um die Sicherheit und den Komfort von Fahrgästen und des Personals zu verbessern, werden bei Schienenfahrzeugen insbesondere in deren Drehgestellen eine Vielzahl von Elastomer-Metall-Lagern eingesetzt. Dabei gelten hinsichtlich eines Brandschutzes strenge Vorschriften (für Europa beispielsweise DIN EN 45545-2 "Bahnanwendungen - Brandschutz in Schienenfahrzeugen") mit dem Ziel, Fahrgäste und das Personal in einem Brandfall dadurch zu schützen, dass genügend Zeit zur Verfügung steht, um trotz des Brandfalls ein Schienenfahrzeug sicher verlassen zu können.

Es ist allgemein bekannt, dass durch den Zusatz brandhemmender Substanzen zu brennbaren Materialien kritische Materialeigenschaften bezüglich des Brandschutzes so verbessert werden können, dass eine Gefährdung im Brandfall vermieden werden oder verringert werden kann. Jedoch ist das Elastomermaterial bei Elastomer-Metall-Lagern im Betrieb, insbesondere bei Schienenfahrzeugen, höchsten mechanischen Belastungen ausgesetzt. Der Zusatz brandhemmender Substanzen ist jedoch regelmäßig mit einer inakzeptablen Schwächung solcher mechanischer Eigenschaften verbunden, was insbesondere bei Gummi als Elastomermaterial zutrifft. Eine solche Schwächung würde das Risiko eines Ausfalls eines Elastomer-Metall-Lagers erhöhen und/oder dessen Bauteillaufzeit verringern, so dass ein Brandschutz mit dieser Maßnahme im vorliegenden Fall mit keiner bekannten brandhemmenden Substanz akzeptabel lösbar ist.

Weiter sind Brandschutzmaterialien aus dem Bausektor und Offshore-Bereich allgemein bekannt in der Art von durch Hitzeeinwirkung aufschäumendes Brandschutzmaterial (HEABM). Diese Brandschutzmaterialien werden unmittelbar an zu schützenden Gegenständen und/oder Vorrichtungen in einer statischen Anwendung angebracht. Im Brandfall bildet dieses Brandschutzmaterial durch Hitzeeinwirkung eine wärmeisolierende Schaumschicht. Die zu schützenden Gegenstände sind zumindest für eine vorbestimmte Zeit gegen eine kritische Hitzeeinwirkung abgeschirmt und geschützt. Gegebenenfalls können damit auch Kabel- oder Rohrdurchführungen im Brandfall gegen einen Durchtritt von Rauchgasen verschlossen werden. Der Aufschäumprozess wird im Brandfall in an sich bekannter Weise bei bestimmten hohen Temperaturen durch eine chemische oder chemisch-physikalische Reaktion im Brandschutzmaterial ausgelöst.

Ein gattungsgemäßes Elastomer-Metall-Lager als Lagerbauteil mit bauteilintegriertem Elastomermaterial-Brandschutz weist wenigstens zwei beabstandete, unverformbare Metall-Lagerteile auf, die in einer betriebsmäßigen Einbausituation des Elastomer-Metall-Lagers jeweils mit einem von zwei gegeneinander elastisch abstützbaren Strukturbauteilen und/oder Anbauteilen verbindbar sind. Zwischen diesen wenigstens zwei Metall-Lagerteilen ist wenigstens ein Elastomerelement angeordnet, welches sowohl mit den zwei Metall-Lagerteilen eine flächig abgedeckte Verbindung als auch frei von außen zugängliche Elastomer-Freiflächenbereiche aufweist, dergestalt, dass bei einer betriebsbedingten Relativbewegung der Strukturbauteile und damit der Metall-Lager-Teile das wenigstens eine Elastomerelement und die Elastomer-Flächenbereiche dynamisch verformbar sind.

Bei einem solchen Elastomer-Metall-Lager als Achsfeder (DE 10 2016 104 497 A1) wird der Brandschutz mittels einer hermetisch feuerfesten, flexiblen Abdeckung vorgeschlagen, wobei der abgedeckte Raum mittels eines Systems mit Inertgas gefüllt ist. Diese Problemlösung ist ersichtlich sehr aufwendig, da die feuerfeste Abdeckung jede Bewegung der Achsfeder mitmachen muss und somit selbst mechanisch hoch beansprucht ist, wobei die erforderliche mechanische Dauerhaltbarkeit und damit ein sicherer Brandschutz problematisch sein dürften. Zudem ist das erforderliche System mit einer dauerhaften Inertgasbereitstellung sehr aufwendig und wartungsintensiv.

Weiter ist ein Brandschutzkonzept in unterschiedlichen Ausführungen bekannt, bei dem auf Elastomerflächen eine Brandschutzmaterial-Beschichtung aufgebracht ist (DE 10 2013 017 571 A1; DE 10 2013 017 570 A1; EP 2 196 492 A1; DE 10 2015 217 881 A1), wobei diese Elastomerflächen ohne Beschichtung Flammen und einer Hitzeeinwirkung frei ausgesetzt wären. Nachteilig werden hier betriebsmäßig erfolgende Elastomerflächenbewegungen auf die Brandschutzmaterial-Beschichtung übertragen. Dadurch können die Haftflächen so stark belastet werden, dass die Brandschutzmaterial-Beschichtung zerstört werden und abplatzen können, wodurch ein sicherer Brandschutz nicht mehr gegeben ist.

Im Begriff "Elastomer-Metall-Lager" ist das Wort "Metall" in fachüblicher Weise weit auszulegen, so dass neben unverformbaren, nicht brennbaren Metallmaterialien auch vergleichbare andere Materialien, insbesondere unverformbare, nicht brennbare Kunststoffmaterialien mit umfasst sein sollen.

Bei der Vielzahl verschiedenartiger Ausführungsformen von Elastomer-Metall-Lagern können ein oder mehrere Elastomerelemente zwischen den wenigstens zwei Metall-Lagerteilen unterschiedlich angebracht sein, insbesondere unter Vorspannung eingepresst und/oder anvulkanisiert und/oder angeklebt und/oder eingelegt sein. Die erfindungsgemäße Brandschutzmaßnahme ist bei allen solchen Lagervarianten verwendbar.

Aufgabe der Erfindung ist es, ein gattungsgemäßes Elastomer-Metall-Lager so weiterzubilden, dass ein einfacher, kostengünstiger und funktionsfähiger Brandschutz, insbesondere entsprechend der Vorgaben bei Bahnanwendungen gewährleistet ist. Eine weitere Aufgabe der Erfindung besteht darin, ein Schienenfahrzeug mit einem solchen Elastomer-Metall-Lager vorzuschlagen.

Diese Aufgabe wird hinsichtlich des Elastomer-Metall-Lagers mit den Merkmalen des Anspruchs 1 und hinsichtlich des Schienenfahrzeugs mit den Merkmalen des Anspruchs 11 gelöst.

Gemäß Anspruch 1 ist an wenigstens einem unverformbaren Metall-Lagerteil im Nahbereich von Elastomer-Freiflächenbereichen ein durch Hitzeeinwirkung aufschäumendes Brandschutzmaterial, ein sogenanntes HEABM, angeordnet, dergestalt dass die Anordnung und/oder Aufschäumrichtung so ausgerichtet sind, dass bei einem durch Hitzeeinwirkung ausgelösten Aufschäumvorgang durch aufschäumendes HEABM eine Hitzeschild-Einkapselung aller Elastomer-Freiflächen des Elastomer-Metall-Lagers ausbildbar ist.

Durch eine solche Hitzeschild-Einkapselung wird eine unmittelbare Einwirkung von Hitze auf das Elastomermaterial unterbunden, so dass zumindest für eine bestimmte Zeitspanne ein Brandschutz mit Flammkennung, der durch die Art des HEABM und/oder die Schaumdicke der Einkapselung vorbestimmt ist, vorliegt. Für eine Bahnanwendung soll eine solche Zeitspanne wenigstens 20 Minuten betragen, in der im Brandfall ein Schienenfahrzeug von Fahrgästen und dem Personal sicher verlassen werden kann.

Im Betriebsfall sind die Elastomer-Freiflächenbereiche entsprechend etwa einem freien Federweg starken dynamischen Verformungen ausgesetzt. Dort angebrachtes HEABM würde bereits in kurzer Zeit zerstört werden und abfallen. Daher wird hier vorteilhaft an unverformbaren Metall-Lagerteilen HEABM angebracht, das damit unbelastet durch mechanische Verformungen über die gesamte Lagerlebensdauer oder bis zu einem tatsächlichen Brandfall sicher gehalten werden kann.

Die Hitzeschild-Einkapselung durch aufgeschäumtes HEABM ist im Brandfall ausreichend, da die weiteren Elastomerflächen an den Metall-Lagerteilen anliegen und diese sowohl gegen die unmittelbare Einwirkung von Flammen und Hitze geschützt sind. Zudem sind die Metall-Lagerteile regelmäßig mit metallischen Strukturbauteilen und/oder Anbauteilen verbunden, so dass darüber gegebenenfalls eine schnelle Wärmeableitung erfolgen kann.

Der wesentliche Vorteil des erfindungsgemäßen Brandschutzes besteht darin, dass einerseits die mechanischen Eigenschaften der Elastomerelemente nicht nachteilig beeinflusst werden und andererseits im normalen Betriebsfall auch das HEABM praktisch keinen unzulässigen mechanischen Belastungen ausgesetzt ist. Zudem sind vorteilhaft die Funktion eines mit einer Hitzeschild-Einkapselung im Brandfall eingekapselten Elastomer-Metall-Lagers und damit auch die Fahreigenschaften kaum beeinflusst, so dass jedenfalls Notlaufeigenschaften vorliegen, zum Beispiel bei Notbremsungen, Ausrollvorgängen etc. im Brandfall.

Grundsätzlich können mit den erfindungsgemäßen Brandschutzmaßnahmen alle brennbaren oder gegebenenfalls schmelzbaren oder ausgasenden Elastomermaterialien in Elastomer-Metall-Lagern gegen eine kritische Hitze-und/oder Flammeneinwirkung geschützt werden. Besonders vorteilhaft kann damit besonders brandkritisches Gummimaterial als Elastomermaterial in Gummi-Metall-Lagern brandgeschützt werden.

Bei vielen bekannten Ausführungsformen von Elastomer-Metall-Lagern sind zur Vergleichmäßigung interner Spannungen Zwischenbleche enthalten, welche bei Gummimaterial einvulkanisiert sind. Diese Zwischenbleche können an Elastomer-Freiflächenbereichen mit unverformbaren Zwischenblech-Überständen vorragen. Auch an diese betriebsmäßig unverformbaren Zwischenblech-Überständen können je nach den Erfordernissen für eine Hitzeschild-Einkapselung zumindest teilweise HEABM angeordnet sein, welche auch hier im Betrieb mechanisch nicht belastet sind.

HEABM ist in unterschiedlichen Zusammensetzungen und Formen allgemein bekannt und marktüblich zu erhalten. Für den erfindungsgemäßen Einsatz kann je nach den Gegebenheiten HEABM mit und/oder ohne Gewebeverstärkung als passgrößengenau schneid- und formbares Bahnmaterial und/oder Plattenmaterial und/oder Blockmaterial verwendet werden. Daraus kann eine Materialschicht und/oder eine Materialhaube und/oder ein Materialvorhang zur Anbringung an Metall-Lagerteilen und/oder gegebenenfalls an Zwischenblech-Überständen hergestellt werden. Für die Anbringung und Befestigung stehen dem Fachmann die üblichen Techniken zur Verfügung, wobei die Anbringung durch Kleben und/oder Klemmen und/oder Verpressen und/oder Klemmen mit Schellen und/oder Schrauben und/oder Vernieten und/oder Verklipsen und/oder Einbördeln und/oder Einkrimpen und/oder Einbinden und/oder Ein-oder Verklammern und/oder Einvulkanisieren und/oder Ein- oder Umspritzen und/oder Einfassen und/oder Einlegen und/oder Einstemmen erfolgen kann.

Für eine gezielte Ausbildung einer Hitzeschild-Einkapselung kann es vorteilhaft sein, an den Lagerteilen und/oder gegebenenfalls an Zwischenblech-Überständen in Aufschäumrichtung ausgerichtete Leitelemente anzuformen und/oder anzubringen, welche mit Leitflächen aufschäumendes HEABM zur Ausbildung der Hitzeschild-Einkapselung leiten.

Je nach der Anordnung und vorgesehener Menge von aufschäumendem Brandschutzmaterial kann je nach den Gegebenheiten eine im Brandfall ausgebildete Einkapselung direkt an Elastomer-Freiflächenbereichen anliegen und/oder diese mit dazwischenliegenden Freiräumen umgeben.

Die vorstehend erläuterte Brandschutzmaßnahme kann vorteilhaft bei den in einer Vielzahl von Ausgestaltungen verwendeten, buchsenartigen Elastomer-Metall-Lagern eingesetzt werden. Diese Lager weisen ein bolzenartiges Innenteil als unverformbares erstes Metall-Lagerteil und ein gehäuseartiges Außenteil als unverformbares zweites Metall-Lagerteil auf mit wenigstens einem dazwischen angehafteten und/oder eingepressten Elastomerelement, welches durch die Aufnahme im Außenteil, beispielsweise einer Buchse, beidseitige, jeweils stirnseitige Elastomer-Freiflächenbereiche aufweist. Auch hier können an beiden Stirnseitenbereichen am unverformbaren bolzenartigen Innenteil und/oder am unverformbaren gehäuseartigen Außenteil HEABM angeordnet sein, die dann bei hoher Hitzeeinwirkung aufschäumen und die Elastomer-Freiflächenbereiche abdecken und Einkapseln. Je nach der Form des bolzenartigen Innenteils und der Anzahl und Anordnung der Elastomerelemente sind bei dieser Lagerart insbesondere sogenannte O-Lager, OH-Lager und OX-Lager bekannt, bei denen vorteilhaft die erfindungsgemäße Brandschutzmaßnahme verwendbar ist.

Ein weiteres Elastomer-Metall-Lager ist als sogenanntes Konuslager bekannt und besteht aus einem Konusteil als unverformbares erstes Metall-Lagerteil und aus einem dieses zumindest teilweise übergreifendes Schalenteil als unverformbares zweites Metall-Lagerteil. Dazwischen ist wenigstens ein Elastomerelement angehaftet und/oder eingepresst, wobei Elastomer-Freiflächenbereiche zwischen dem Schalenteil und dem Konusteil bestehen. Hier ist zur Realisierung des erfindungsgemäßen Brandschutzes mit dem Schalenteil ein glockenförmiger Vorhang aus flachem, durchgehend geschlossenen und/oder zu Fransen längsgeschlitzten HEABM verbunden, der die Elastomer-Freiflächenbereiche zumindest teilweise im nicht aufgeschäumten Zustand in einem Abstand umgibt. Dadurch ist betriebsmäßig das HEABM durch die einzige Verbindung mit dem Schalenteil von Relativbewegungen des Konusteils und der Elastomerelemente entkoppelt und damit mechanisch nicht belastet. Im Brandfall schäumt das HEABM des glockenförmigen Vorhangs auf und kapselt die Elastomer-Freiflächenbereiche ein. Der glockenförmige Vorhang aus HEABM wird hier konstruktiv zweckmäßig an einem seitlich umlaufenden Bund des Schalenteils befestigt.

In einer weiteren Ausgestaltung ist das Elastomer-Metall-Lager als Luftfeder ausgebildet, bestehend aus einem Konuslager mit einem Konusteil als unverformbares erstes Metall-Lagerteil, aus einem dieses zumindest teilweise übergreifenden, unverformbaren Schalenteil und aus einem am Schalenteil luftdicht angeschlossenen druckluftbefüllbaren, konzentrischen Balgteil in der Art einer Balgblase. Das Balgteil besteht aus einem flexiblen, brennbaren Balgseitenwand-Ringteil, insbesondere aus Gummimaterial und einem dem Konusteil axial gegenüberliegenden, unverformbaren Balg-Plattenteil als zweites unverformbares Lagerteil, insbesondere als Metall-Lagerteil.

Zur Realisierung des Brandschutzes ist bei einer solchen Luftfeder mit dem Balg-Plattenteil ein glockenförmiger Vorhang aus flachem, durchgehend geschlossenen und/oder zu Fransen längsgeschlitzten HEABM verbunden, der das Balgseitenwand-Ringteil und die Elastomer-Freiflächen des Konuslagers zumindest teilweise im nicht aufgeschäumten Zustand umgibt. Zweckmäßig ist hier der glockenförmige Vorhang umlaufend an einem Balg-Plattenteil-Seitenrand angeschlossen. Im Brandfall kapselt aufschäumendes HEABM sowohl das Balgseitenwand-Ringteil als auch die Elastomer-Freiflächen des Konuslagers ein. Die Ausführung des glockenförmigen Vorhangs mit Fransen stellt je nach den konkreten Gegebenheiten sicher, dass diese bei extremen Lagerauslenkungen nicht mechanisch belastet werden, sondern ausweichen können.

Je nach den konkreten Lagergegebenheiten und insbesondere der Länge von HEABM-Vorhängen kann es zur brandbedingten Ausbildung einer sicheren Hitzeschild-Einkapselung aller brandgefährdeten Freiflächenbereiche erforderlich werden, zusätzlich zu einem glockenförmigen HEABM-Vorhang bei solchen Luftfedern zusätzliche Maßnahmen und HEABM-Anordnungen vorzusehen.

Eine Maßnahme dazu kann eine Verengung des glockenförmigen HEABM-Vorhangs im Bereich des Konuslagers sein. Eine weitere Maßnahme kann ein mit dem Konusteil am Konusfuß verbundenes plattenförmiges Ringteil aus HEABM sein, welches im Brandfall zusätzlich zum HEABM-Vorhang aufschäumen kann. Dieses plattenförmige Ringteil hat zweckmäßig etwa den Durchmesser des glockenförmigen Vorhangs. Ersichtlich kann beim Einsatz eines solchen zusätzlichen plattenförmigen Ringteils aus HEABM die Vorhanglänge relativ kurz gewählt werden. Als weitere zusätzliche Maßnahme kann gegebenenfalls auch an Zwischenblech-Überständen und/oder an Schalenteilenbereichen HEABM angeordnet werden, welches im Brandfall zusätzlich zum HEABM-Vorhang aufschäumt und eine sichere Hitzeschild-Einkapselung ausbildet.

In einer weiteren Ausgestaltung kann alternativ zu einem glockenförmigen Vorhang aus HEABM ein solcher glockenförmiger Vorhang aus unbrennbarem, festem Material hergestellt sein, wobei dann im Vorhang, insbesondere in dessen unterem Bereich, vorzugsweise umlaufend HEABM angebracht sein kann. Vorzugsweise werden hier auch Leitbleche angebracht, mit denen aufschäumendes HEABM nach unten zur Ausbildung einer sicheren Hitzeschild-Einkapselung geleitet wird.

Weiter wird mit Anspruch 12 ein Schienenfahrzeug mit einem vorstehend erläuterten Elastomer-Metall-Lager beansprucht.

Anhand einer Zeichnung werden Ausführungsbeispiele der Erfindung mit weiteren Einzelheiten dargestellt.

Es zeigen:
- Figur 1: ein Buchsen-Lager in teilweise geschnittener Seitenansicht und Figur 1a in einer stirnseitigen Draufsicht,
- Figur 2: ein Konuslager,
- Figuren 3 bis 8: Luftfedern in unterschiedlichen Ausführungsformen.

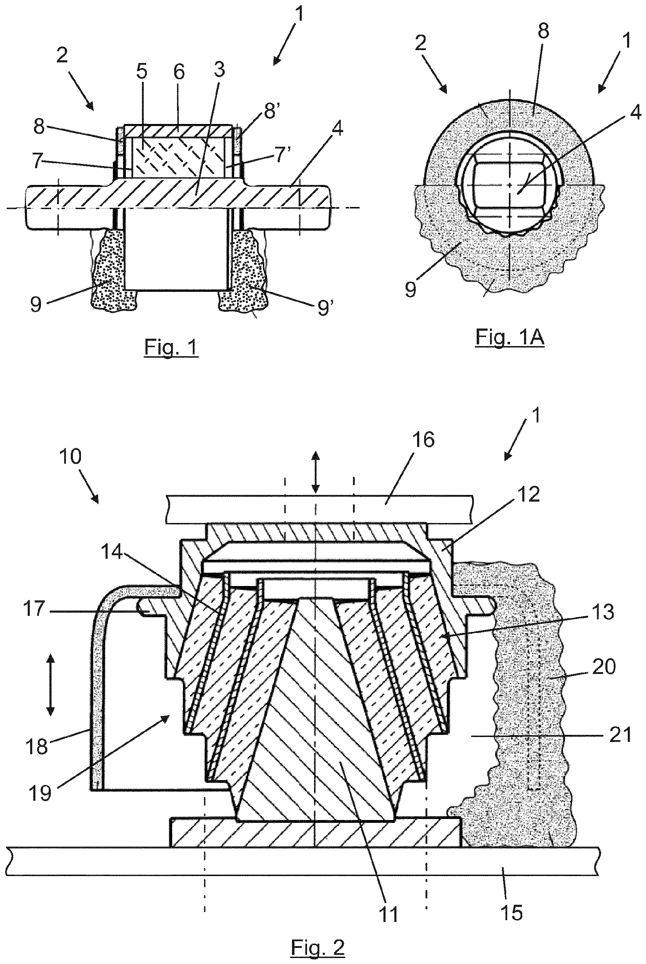

In Figur 1 und Figur 1a ist ein Elastomer-Metall-Lager 1 als Buchsenlager 2 dargestellt mit einem Lagerbolzen 3 als unverformbares erstes Metall-Lagerteil, welches hier mittels Pratzen 4 mit einem (nicht dargestellten) Anbauteil verbindbar ist. Ein ringförmiges Elastomerelement 5 ist in ein Außenrohr 6 als unverformbares zweites Metalllagerteil eingepresst.

Das Elastomerelement 5 weist beidseitig stirnseitige Elastomer-Flächenbereiche 7, 7' auf, in deren Nahbereich jeweils an längsseitigen Überständen des Außenrohrs 6 HEABM-Ringe 8, 8' angeordnet sind, wie dies aus dem Längsschnitt der oberen Hälfte von Figur 1 ersichtlich ist. Die HEABM-Ringe 8, 8' liegen in einem so großen Abstand zu den Elastomer-Freiflächenbereichen 7, 7', dass sie bei üblichen betriebsbedingten Lagerauslenkungen nicht berührt und damit nicht belastet werden.

Im Brandfall schäumen die HEABM-Ringe 8, 8' auf und bilden damit jeweils stirnseitige Hitzeschild-Einkapselungen 9, 9' für die Elastomer-Freiflächenbereiche 7, 7', wie dies aus dem unteren Teil von Figur 1 und Figur 1a ersichtlich ist.

Anhand des Buchsenlagers 2 der Figuren 1 und 1a ist das Prinzip der erfindungsgemäßen Brandschutzmaßnahme einfach ersichtlich, nämlich die Anordnung von HEABM an unverformbaren Lagerteilen im Nahbereich, jedoch beabstandet zu Elastomer-Freiflächenbereichen 7, 7' mit der Möglichkeit einer Aufschäumung und Einkapselung dieser Elastomer-Freiflächenbereiche im Brandfall.

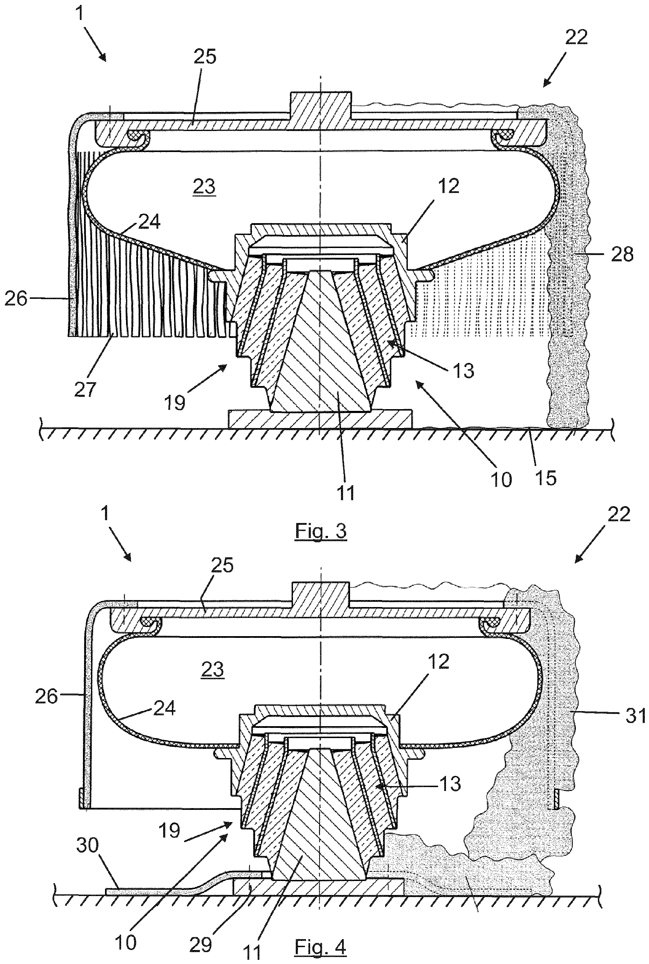

In Figur 2 ist ein Elastomer-Metall-Lager 1 als Konuslager 10 ausgebildet, mit einem Konusteil 11 als unverformbares erstes Metall-Lagerteil und einem dieses teilweise übergreifenden Schalenteil 12 als unverformbares zweites Metall-Lagerteil sowie mit einem dazwischen angehafteten Elastomerelement 13, welches hier zwei Zwischenbleche 14 enthält. Das Konusteil 11 ist mit einem ersten Strukturbauteil 15 und das Schalenteil 12 mit einem zweiten Strukturbauteil 16 oder einem Anbauteil verbunden (in den Figuren 3 bis 8 sind der Übersichtlichkeit halber jeweils die angeschlossenen Strukturbauteile bzw. Anbauteile zum Teil weggelassen).

Zur Realisierung des Brandschutzes ist mit dem Schalenteil 12 an einem randseitigen Bund 17 ein durchgehend geschlossener HEABM-Vorhang 18 befestigt, der Elastomer-Freiflächenbereiche 19 des Elastomerelements 13 im normalen Betriebsfall in einem Abstand umgibt (linke Seite von Figur 2). Im Brandfall schäumt durch Hitzeeinwirkung der HEABM-Vorhang 18 auf und bildet eine Hitzeschild-Einkapselung 20 (rechte Seite von Figur 2) mit einem Freiraum 21 zu den Elastomer-Freiflächenbereichen 19.

In den Figuren 3 bis 8 sind unterschiedliche Ausführungsformen von Luftfedern 22 als Elastomer-Metall-Lager 1 dargestellt, wie sie zahlreich insbesondere im Drehgestell von Schienenfahrzeugen eingesetzt werden. Die Ausführungen der Luftfedern 22 in den Figuren 3 bis 8 weisen jeweils ein Konuslager 10 auf, wie es (ohne den dortigen HEABM-Vorhang 18) in Figur 2 gezeigt ist, so dass die dortigen Bezugszeichen weiter verwendet werden. Das Konuslager 10 ist jeweils ergänzt um ein am Schalenteil 12 luftdicht angeschlossenes, druckluftbefüllbares, konzentrisches Balgteil 23, welches aus einem flexiblen, brennbaren Balgseitenwandringteil und einem dem Konusteil 11 axial gegenüberliegenden, unverformbaren, nicht brennbaren Balg-Plattenteil 25 als zweites Metall-Lagerteil besteht.

Mit dem Balg-Plattenteil 25 ist in allen Ausführungsformen der Figuren 3 bis 8 ein glockenförmiger Vorhang 26 verbunden, der jeweils das Balgseitenwand-Ringteil 24 und mehr oder weniger die Elastomer-Freiflächenbereiche 19 des Konuslagers 10 im normalen Betriebszustand umgibt.

Zur Realisierung eines Brandschutzes ist dieser Vorhang 26 in den Ausführungsformen der Figuren 3 bis 8 jeweils unterschiedlich ausgebildet, wobei der normale Betriebsfall ohne Brandereignis jeweils in den linken Seiten der Figuren 3 bis 8 dargestellt ist, der Brandschutzfall mit bereits ausgebildeter Hitzeschild-Einkapselung ist jeweils im rechten Teil der Figuren 3 bis 8 gezeigt.

In Figur 3 ist der Vorhang 26 relativ lang bis etwa zur Längsmitte des Konusteils 11 und besteht aus Fransen 27 von HEABM, die im Brandfall die dargestellte Hitzeschild-Einkapselung 28 zwischen dem Balgplattenteil 25 und einem mit dem Fuß des Konusteils 11 verbundenen Strukturteil 15 ausbilden.

In der Ausführungsform nach Figur 4 ist der Vorhang 26 als HEABM-Vorhang mit durchgehender Vorhangfläche jedoch ähnlich wie in Figur 3 ausgebildet. Zusätzlich ist am Fußteil 29 des Konusteils 11 ein plattenförmiges HEABM-Ringteil 30 angeordnet, welches zusätzlich zur Ausbildung der Hitzeschild-Einkapselung 31 beiträgt, wie dies aus Figur 4, rechte Seite ersichtlich ist.

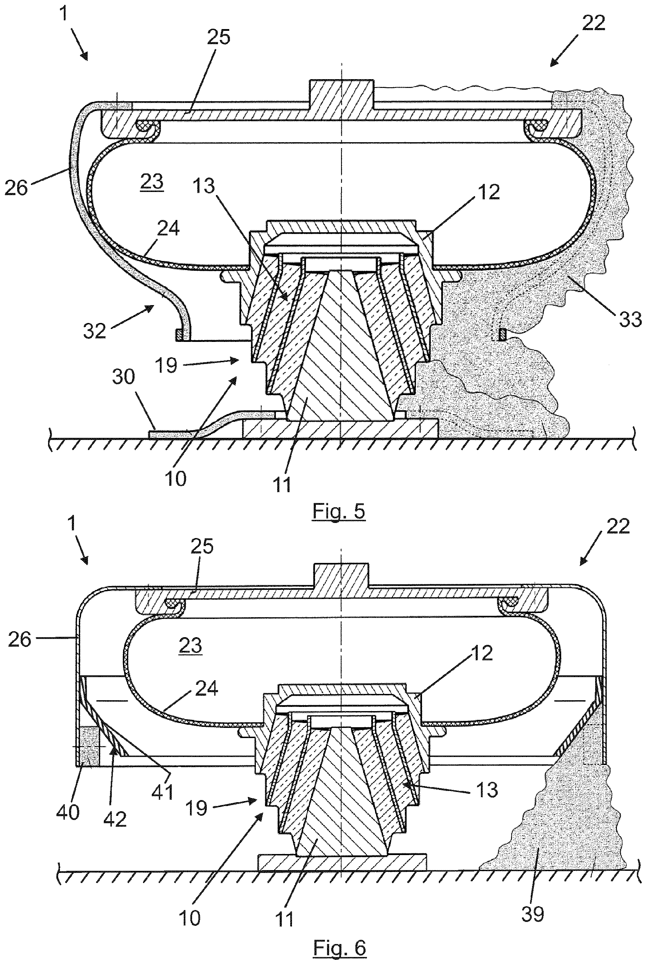

Als Variante zur Figur 4 ist in Figur 5 der HEABM-Vorhang 26 im Normalbetrieb zum Konuslager 10 hin mit einer Einschnürung 32 verengt, so dass sich im Brandfall eine Hitzeschild-Einkapselung 33 ausbildet, die sowohl am Balgseitenwand-Ringteil 24 als auch an den Elastomer-Freiflächenbereichen des Konuslagers 10 anliegt, wie dies aus der rechen Seite von Figur 5 ersichtlich ist.

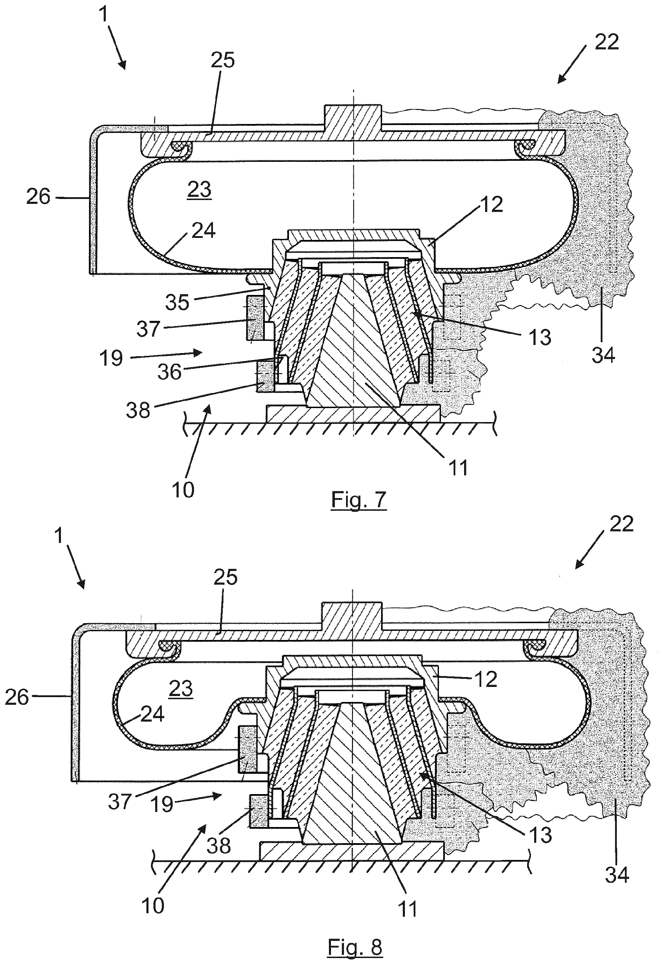

Eine Ausführungsform mit einem relativ kurzen HEABM-Vorhang 26, welcher nur das Balgseitenwand-Ringteil 24 umgibt, ist in den Figuren 7 und 8 dargestellt. Um im Brandfall hier auch eine Hitzeschild-Einkapselung 34 zu erhalten, welche auch die Elastomer-Freiflächenbereiche 19 des Konuslagers 10 umfasst, sind sowohl an einer Schalenwand 35 des Schalenteils 12 als auch an Zwischenblechüberständen 36 HEABM-Ringteile 37, 38 angeordnet.

Figur 7 zeigt die Luftfeder 22 unter Druck, während Figur 8 die Luftfeder 22 von Figur 7 drucklos zeigt. Aus den Darstellungen der Figuren 7 und 8 geht hervor, dass in beiden Betriebsfällen jeweils eine sichere Hitzeschild-Einkapselung 34 als Brandschutz gewährleistet ist.

Bei einer weiteren Ausführungsform nach Figur 6 ist der glockenförmige Vorhang aus unbrennbarem, festem Material hergestellt. HEABM ist hier im Vorhanginnenbereich angeordnet und kann zur Ausbildung einer Hitzeschildeinkapselung 39 nach außen und unten aufschäumen. Konkret ist hier ein HEABM-Ring 40 an der unteren Innenseite des Vorhangs 26 angeordnet in Verbindung mit einem umlaufenden Leitblech 41, dessen Leitfläche 42 schräg nach unten so ausgerichtet ist, dass sich im Brandfall die in Figur 6 rechte Seite dargestellte Hitzeschild-Einkapselung 39 ausbildet.

## Patentansprüche

1. Elastomer-Metall-Lager als Lagerbauteil mit bauteilintegriertem Elastomermaterial-Brandschutz,
mit wenigstens zwei beabstandeten, betriebsmäßig unverformbaren Metall-Lagerteilen (3, 6; 11, 12; 25), die in einer betriebsmäßigen Einbausituation des Elastomer-Metall-Lagers (1) jeweils mit einem von zwei gegeneinander elastisch abstützbaren Strukturbauteilen (15, 16) und/oder Anbauteilen verbindbar sind, und
mit wenigstens einem Elastomerelement (5; 13) zwischen den wenigstens zwei Metall-Lagerteilen (3, 6; 11, 12; 25), welches sowohl mit den zwei Metall-Lagerteilen (3, 6; 11, 12; 25) eine flächig abgedeckte Verbindung als auch frei von außen zugängliche Elastomer-Freiflächenbereiche (7, 7'; 19; 24) aufweist, dergestalt dass bei einer betriebsbedingten Relativbewegung der Strukturbauteile (15, 16) und damit der Metall-Lagerteile (3, 6; 11, 12; 25) das wenigstens eine Elastomerelement (5; 13) und die Elastomer-Freiflächenbereiche (7, 7'; 19; 24) dynamisch verformbar sind,
**dadurch gekennzeichnet,**
**dass** an wenigstens einem unverformbaren Metall-Lagerteil (3, 6; 11, 12; 25) im Nahbereich von Elastomer-Freiflächenbereichen (7, 7'; 19; 24) durch Hitzeeinwirkung aufschäumendes Brandschutzmaterial als sogenanntes HEABM (8, 8'; 18; 26; 30; 28; 40) angeordnet ist, dergestalt dass die Anordnung und/oder Aufschäumrichtung so ausgerichtet sind, dass bei einem durch Hitzeeinwirkung ausgelösten Aufschäumvorgang durch aufgeschäumtes HEABM eine Hitzeschild-Einkapselung (9, 9'; 20; 31; 33; 34) aller Elastomer-Freiflächenbereiche (7, 7'; 19) des Elastomer-Metall-Lagers (1) ausbildbar ist.

2. Elastomer-Metall-Lager nach Anspruch 1, **dadurch gekennzeichnet, dass** das Elastomermaterial des wenigstens einen Elastomerelements (5; 13) Gummimaterial ist.

3. Elastomer-Metall-Lager nach Anspruch 1 oder Anspruch 2, **dadurch gekennzeichnet,**
**dass** im wenigstens einen Elastomerelement (13) Zwischenbleche (14) enthalten, bei Gummi als Elastomermaterial einvulkanisiert, sind, die zumindest teilweise an Elastomer-Freiflächenbereichen (19) mit unverformbaren Zwischenblech-Überständen vorragen (36), und
**dass** an unverformbaren Zwischenblech-Überständen(36) zumindest teilweise HEABM (38) angeordnet ist.

4. Elastomer-Metall-Lager nach einem der Ansprüche 1 bis 4, **dadurch gekennzeichnet, dass** HEABM mit oder ohne Gewebeverstärkung als passgrößengenau schneid- und formbares Bahnmaterial und/oder Plattenmaterial und/oder Blockmaterial verwendbar ist, welches als Materialschicht (8, 8'; 30;38) und/oder Materialhaube und/oder Materialvorhang (26) an Metall-Lagerteilen (3; 12; 25; 11) und/oder Zwischenblech-Überständen(36) durch Kleben und/oder Klemmen und/oder Verpressen und/oder Klemmen mit Schellen und/oder Schrauben und/oder Vernieten und/oder Verklipsen und/oder Einbördeln und/oder Einkrimpen und/oder Einbinden und/oder Ein- oder Verklammern und/oder Einvulkanisieren und/oder Ein- oder Umspritzen und/oder Einfassen und/oder Einlegen und/oder Einstämmen befestigbar ist.

5. Elastomer-Metall-Lager nach einem der Ansprüche 1 bis 4, **dadurch gekennzeichnet, dass** an unverformbaren Metall-Lagerteilen und/oder Zwischenblech-Überständen (36) in Aufschäumrichtung ausgerichtete Leitelemente (41) angeformt und/oder angebracht sind mit Leitflächen (42) durch die aufschäumendes HEABM (40) zur Ausbildung der Hitzeschild-Einkapselung (39) leitbar ist.

6. Elastomer-Metall-Lager nach einem der Ansprüche 1 bis 5, **dadurch gekennzeichnet, dass** aufgeschäumtes HEABM der ausgebildeten Hitzeschild-Einkapselung (20; 38; 31; 39) mit Freiräumen (21) und/oder anliegend die Elastomer-Freiflächenbereiche (7, 7'; 19; 24) umgibt.

7. Elastomer-Metall-Lager nach einem der Ansprüche 1 bis 6, **dadurch gekennzeichnet,**
**dass** das Elastomer-Metall-Lager (1) als buchsenartiges Lager (2) aufgebaut ist mit einem bolzenartigen Innenteil (3) als unverformbares erstes Metall-Lagerteil und einem gehäuseartigen Außenteil (6) als unverformbares zweites Metall-Lagerteil und wenigstens einem dazwischen angehafteten und/oder eingepressten Elastomerelement (5) mit beidseitigen, stirnseitigen Elastomer-Freiflächenbereichen (7, 7'), und
**dass** HEABM (8, 8') an beiden Stirnseitenbereichen am unverformbaren bolzenartigen Innenteil und/oder am unverformbaren gehäuseartigen Außenteil (6) angeordnet ist.

8. Elastomer-Metall-Lager nach einem der Ansprüche 1 bis 6, **dadurch gekennzeichnet,**
**dass** das Elastomer-Metall-Lager (1) als Konuslager (10) ausgebildet ist mit einem Konusteil (11) als unverformbares erstes Metall-Lagerteil und mit einem dieses zumindest teilweise übergreifenden Schalenteil (12) als unverformbares zweites Metall-Lagerteil und wenigstens einem dazwischen angehafteten und/oder eingepressten Elastomerelement (13) mit Elastomer-Freiflächenbereichen (19) zwischen dem Schalenteil (12) und dem Konusteil (11), und
**dass** mit dem Schalenteil (12) ein glockenförmiger HEABM-Vorhang (18) aus flachem, durchgehend geschlossenen und/oder zu Fransen (17) längsgeschlitztem HEABM verbunden ist, der die Elastomer-Freiflächenbereiche (19) zumindest teilweise im nicht aufgeschäumten Zustand in einem Abstand umgibt.

9. Elastomer-Metall-Lager nach einem der Ansprüche 1 bis 6, **dadurch gekennzeichnet,**
**dass** das Elastomer-Metall-Lager (1) als Luftfeder (22) ausgebildet ist bestehend aus einem Konuslager (10) mit einem Konusteil (11) als unverformbares erstes Metall-Lagerteil, aus einem dieses zumindest teilweise übergreifendes, unverformbares Schalenteil (12) und aus einem am Schalenteil (12) luftdicht angeschlossenen, druckluftbefüllbaren, konzentrischen Balgteil (23), das aus einem flexiblen, brennbaren Balgseitenwand-Ringteil (24) und einem dem Konusteil (11) axial gegenüberliegenden, unverformbaren, nicht brennbaren Balg-Plattenteil (25) als zweites Metall-Lagerteil besteht, und dass mit dem Balg-Plattenteil (25) ein glockenförmiger HEABM-Vorhang aus flachem, durchgehend geschlossenen und/oder zu Fransen (27) längsgeschlitzten HEABM verbunden ist, der das Balgseitenwand-Ringteil (24) und die Elastomer-Freiflächenbereiche (19) des Konuslagers (10) zumindest teilweise im nichtaufgeschäumten Zustand umgibt.

10. Elastomer-Metall-Lager nach Anspruch 9, **dadurch gekennzeichnet, dass** der glockenförmige HEABM-Vorhang (26) im Bereich des Konuslagers (10) auf dieses hin verengt ist und/oder dass mit dem Konusteil (10) an einem Konusfußteil (29) ein plattenförmiges HEABM-Ringteil (30) verbunden ist und/oder dass im wenigstens einen Elastomerelement (13) wenigstens ein Zwischenblech (14) mit Zwischenblech-Überständen (36) und/oder Schalenteilbereiche (35) vorliegen, die jeweils von einem relativ kurzen HEABM-Vorhang (26) nicht überdeckt sind, und dass an den Zwischenblech-Überständen (36) und/oder Schalenteilbereichen (35) HEABM (38, 38') angeordnet ist.

11. Elastomer-Metall-Lager nach Anspruch 9, **dadurch gekennzeichnet, dass** der glockenförmige Vorhang (26) aus unbrennbarem, festem Material hergestellt ist und
dass im Vorhang (26) gegebenenfalls in Verbindung mit Leitblechen (41) HEABM (40) angeordnet ist.

12. Schienenfahrzeug mit einem Elastomer-Metall-Lager nach einem der vorhergehenden Ansprüche.

## Claims

1. Elastomer/metal bearing as a bearing component having elastomermaterial fire protection integrated in the component,
having at least two spaced-apart metal bearing parts (3, 6; 11, 12; 25) which are non-deformable in the intended operation, and which in an installed state of the elastomer/metal bearing (1) according to the intended operation are in each case connectable to one of two structural components (15, 16) and/or add-on parts which are capable of being elastically supported in relation to one another, and
having between the at least two metal bearing parts (3, 6; 11, 12; 25) at least one elastomer element (5; 13) which in relation to the two metal bearing parts (3, 6; 11, 12; 25) has a connection which is covered in a planar manner as well as has elastomer clearance face regions (7, 7'; 19; 24) which are freely accessible from the outside in such a manner that the at least one elastomer element (5; 13) and the elastomer clearance face regions (7, 7'; 19; 24) are dynamically deformable in an operation-related relative movement of the structural components (15, 16) and thus of the metal bearing parts (3, 6; 11, 12; 25), **characterized in that**
fire protection material which foams under the effect of heat is disposed as so-called HEABM (8, 8'; 18; 26; 30; 28; 40) in the proximity of elastomer clearance face regions (7, 7'; 19; 24) on at least one non-deformable metal bearing part (3, 6; 11, 12; 25) in such a manner that the assembly and/or the foaming direction are/is aligned such that, in the event of a foaming procedure triggered by the effect of heat, a heat shield encapsulation (9, 9'; 20; 31; 33; 34) of all elastomer clearance face regions (7, 7'; 19) of the elastomer/metal bearing (1) is capable of being configured by foamed HEABM.

2. Elastomer/metal bearing according to Claim 1, **characterized in that** the elastomer material of the at least one elastomer element (5; 13) is a rubber material.

3. Elastomer/metal bearing according to Claim 1 or Claim 2, **characterized in that**
intermediate sheet-metal plates (14) are contained in the at least one elastomer element (13), said intermediate sheet-metal plates (14) in the case of rubber as the elastomer material being vulcanized into said rubber, said intermediate sheet-metal plates (14) by way of non-deformable intermediate sheet-metal plate projections (36) protruding at least partially on elastomer clearance face regions (19), and **in that** HEABM (38) is at least partially disposed on non-deformable intermediate sheet-metal plate projections (36).

4. Elastomer/metal bearing according to one of Claims 1 to 4, **characterized in that**
HEABM with or without a woven-fabric reinforcement can be used as web material and/or sheet material and/or block material which is capable of being cut and shaped to a size of exact fit, said HEABM as a material layer (8, 8'; 30; 38) and/or a material hood and/or a material curtain (26) being fastenable to metal bearing parts (3; 12; 25; 11) and/or intermediate sheet-metal plate projections (36) by adhesive bonding and/or clamping and/or compressing and/or clamping with brackets and/or screws, and/or riveting and/or clip-fitting and/or flaring and/or crimping and/or wrapping and/or tacking and/or vulcanizing and/or insert-moulding and/or over-moulding and/or framing and/or inserting and/or mortising.

5. Elastomer/metal bearing according to one of Claims 1 to 4, **characterized in that**
guiding elements (41) which are aligned in the foaming direction are moulded on and/or attached to non-deformable metal bearing parts and/or intermediate sheet-metal plate projections (36), said guiding elements (41) having guiding faces (42) by way of which foaming HEABM is directable so as to configure the heat shield encapsulation (39).

6. Elastomer/metal bearing according to one of Claims 1 to 5, **characterized in that**
foamed HEABM of the configured heat shield encapsulation (20; 38; 31; 39) surrounds the elastomer clearance face regions (7, 7'; 19; 24) by way of voids (21) and/or so as to bear on said elastomer clearance face regions (7, 7'; 19; 24).

7. Elastomer/metal bearing according to one of Claims 1 to 6, **characterized in that**
the elastomer/metal bearing (1) is constructed as a sleeve-type bearing (2), having a bolt-type internal part (3) as a non-deformable first metal bearing part, and a housing-type external part (6) as a non-deformable second metal bearing part, and at least one elastomer element (5) bonded and/or press-fitted therebetween, said elastomer element (5) having end-side elastomer clearance face regions (7, 7') on both sides, and
**in that** HEABM (8, 8') is disposed on both end-side regions on the non-deformable bolt-type internal part and/or on the non-deformable housing-type external part (6).

8. Elastomer/metal bearing according to one of Claims 1 to 6, **characterized in that**
the elastomer metal bearing (1) is configured as a conical bearing (10) having a conical part (11) as a non-deformable first metal bearing part, and having shell part (12) which as a non-deformable second metal bearing part at least partially engages across said conical part (11), and at least one elastomer element (13) which is bonded and/or press-fitted therebetween, said elastomer element (13) having elastomer clearance face regions (19) between the shell part (12) and the conical part (11), and **in that** a bell-shaped HEABM curtain (18) from flat HEABM which is continuously compact and/or longitudinally cut to slits so as to form fringes (17) is connected to the shell part (12), said HEABM curtain (18) in the non-foamed state at least partially surrounding the elastomer clearance face regions (19) at a spacing.

9. Elastomer/metal bearing according to one of Claims 1 to 6, **characterized in that**
the elastomer/metal bearing (1) is configured as an air spring (22) composed of a conical bearing (10) having a conical part (11) as a non-deformable first metal bearing part, of a non-deformable shell part (12) which at least partially engages across said conical part (11), and of a concentric bellows part (23) which is capable of being filled with compressed air and is connected in an air-tight manner to the shell part (12), and which is composed of a flexible, combustible, bellows lateral-wall annular part (24) and of a non-deformable, non-combustible, bellows plate part (25) as a second metal bearing part which is axially opposite the conical part (11), and
**in that** a bell-shaped HEABM curtain from flat HEABM which is continuously compact and/or longitudinally cut to slits so as to form fringes (27) is connected to the bellows plate part (25), said HEABM curtain in the non-foamed state at least partially surrounding the bellows lateral-wall annular part (24) and the elastomer clearance face regions (19) of the conical bearing (10).

10. Elastomer/metal bearing according to Claim 9, **characterized in that** the bell-shaped HEABM curtain (26) in the region of the conical bearing (10) is constricted towards the latter, and/or **in that** a plate-shaped HEABM annular part (30) is connected to the conical part (10) at a cone-base part (29), and/or
**in that** at least one intermediate sheet-metal plate (14) having intermediate sheet-metal plate projections (36) and/or shell sub-regions (35) which are in each case not covered by a relatively short HEABM curtain (26) is/are present in the at least one elastomer element (13), and **in that** HEABM (38, 38') is disposed on the intermediate sheet-metal plate projections (36) and/or shell sub-regions (35).

11. Elastomer/metal bearing according to Claim 9, **characterized in that** the bell-shaped curtain (26) is produced from non-combustible, solid, material, and **in that** HEABM (40), optionally in conjunction with sheet-metal guiding plates (41), is disposed in the curtain (26).

12. Rail vehicle having an elastomer/metal bearing according to one of the preceding claims.

## Revendications

1. Palier en élastomère-métal en tant que composant de palier avec une protection ignifuge en matériau élastomère intégrée au composant, comprenant au moins deux parties de palier en métal (3, 6 ; 11, 12 ; 25) espacées, non déformables fonctionnellement, qui, dans une situation d'installation fonctionnelle du palier en élastomère-métal (1), peuvent à chaque fois être connectées à l'un parmi deux composants structurels (15, 16) et/ou composants rapportés pouvant être supportés élastiquement l'un contre l'autre, et
comprenant au moins un élément en élastomère (5 ; 13) entre les au moins deux parties de palier en métal (3, 6 ; 11, 12 ; 25), lequel présente à la fois une liaison recouverte à plat avec les deux parties de palier en métal (3, 6 ; 11, 12 ; 25) ainsi que des régions de surface libre en élastomère (7, 7' ; 19 ; 24) librement accessibles depuis l'extérieur, de telle sorte que lors d'un déplacement relatif au cours du fonctionnement des composants structurels (15, 16) et par conséquent des parties de palier en métal (3, 6 ; 11, 12 ; 25), l'au moins un élément en élastomère (5 ; 13) et les régions de surface libre en élastomère (7, 7' ; 19 ; 24) puissent être déformés dynamiquement,
**caractérisé en ce**
**qu'**au niveau d'au moins une partie de palier en métal non déformable (3, 6 ; 11, 12 ; 25), dans la région à proximité des régions de surface libre en élastomère (7, 7' ; 19 ; 24), est disposé un matériau ignifuge moussant sous l'effet de la chaleur, aussi appelé HEABM (en allemand "durch Hitzeeinwirkung aufschäumendes Brandschutz-material"), (8, 8' ; 18 ; 26 ; 30 ; 28 ; 40), de telle sorte que l'agencement et/ou la direction de moussage soient orientés de telle sorte que dans le cas d'une opération de moussage déclenchée sous l'effet de la chaleur, un encapsulage formant bouclier thermique (9, 9' ; 20 ; 31 ; 33 ; 34) de toutes les régions de surface libre en élastomère (7, 7' ; 19) du palier en élastomère-métal (1) puisse être formé par le HEABM moussé.

2. Palier en élastomère-métal selon la revendication 1, **caractérisé en ce que** le matériau en élastomère de l'au moins un élément en élastomère (5 ; 13) est un matériau à base de caoutchouc.

3. Palier en élastomère-métal selon la revendication 1 ou la revendication 2, **caractérisé en ce que** des tôles intermédiaires (14) sont contenues dans au moins un élément en élastomère (13), lesquelles sont incorporées par vulcanisation lorsque le matériau en élastomère est du caoutchouc, et lesquelles dépassent au moins en partie des régions de surface libre en élastomère (19) avec des dépassements de tôles intermédiaires non déformables (36), et
**en ce que** du HEABM (38) est disposé au moins en partie au niveau des dépassements de tôles intermédiaires non déformables (36).

4. Palier en élastomère-métal selon l'une quelconque des revendications 1 à 4, **caractérisé en ce que** l'on peut utiliser le HEABM avec ou sans armure en tissu en tant que matériau en bande et/ou en plaque et/ou en bloc, pouvant être formé et découpé à la taille ajustée sur mesure, qui est fixé en tant que couche de matériau (8, 8' ; 30 ; 38) et/ou en tant que coiffe de matériau et/ou rideau de matériau (26) sur des pièces de palier en métal (3 ; 12 ; 25 ; 11) et/ou des tôles intermédiaires non déformables (36) par collage et/ou serrage et/ou pressage et/ou serrage avec des colliers de serrage et/ou vissage et/ou rivetage et/ou encliquetage et/ou bordage et/ou sertissage et/ou liaison et/ou enserrage ou agrafage et/ou vulcanisation et/ou injection et/ou surmoulage et/ou incorporation et/ou insertion et/ou matage.

5. Palier en élastomère-métal selon l'une quelconque des revendications 1 à 4, **caractérisé en ce que** des éléments conducteurs (41) orientés dans la direction de moussage sont façonnés et/ou appliqués au niveau des parties de palier en métal non déformables et/ou des dépassements de tôles intermédiaires (36), avec des surfaces conductrices (42) à travers lesquelles le HEABM moussant (40) peut être guidé pour former l'encapsulage formant bouclier thermique (39).

6. Palier en élastomère-métal selon l'une quelconque des revendications 1 à 5, **caractérisé en ce que** le HEABM moussé de l'encapsulage formant bouclier thermique créé (20 ; 38 ; 31 ; 39) entoure les régions de surface libre en élastomère (7, 7' ; 19 ; 24) avec des espaces libres (21) et/ou en contact contre celles-ci.

7. Palier en élastomère-métal selon l'une quelconque des revendications 1 à 6, **caractérisé en ce que**
le palier en élastomère-métal (1) est réalisé sous forme de palier de type douille (2) avec une partie intérieure (3) de type boulon en tant que première partie de palier en métal non déformable et une partie extérieure (6) de type boîtier en tant que deuxième partie de palier en métal non déformable et au moins un élément en élastomère (5) adhérant et/ou pressé entre celles-ci, avec des régions frontales de surfaces libres en élastomère (7, 7') des deux côtés, et
**en ce que** le HEABM (8, 8') est disposé au niveau des deux régions frontales sur la partie intérieure de type boulon non déformable et/ou sur la partie extérieure (6) de type boîtier non déformable.

8. Palier en élastomère-métal selon l'une quelconque des revendications 1 à 6, **caractérisé en ce que**
le palier en élastomère-métal (1) est réalisé sous forme de palier conique (10) avec une partie conique (11) en tant que première partie de palier en métal non déformable et avec une partie de coque (12) venant en prise au moins en partie par-dessus celle-ci, en tant que deuxième partie de palier en métal non déformable, et avec au moins un élément en élastomère (13) adhérant et/ou pressé entre celles-ci, avec des régions de surfaces libres en élastomère (19) entre la partie de coque (12) et la partie conique (11), et
**en ce qu'**un rideau en HEABM (18) en forme de cloche, constitué de HEABM plat, fermé de manière continue, et/ou fendu longitudinalement pour produire des franges (17), est connecté à la partie de coque (12), lequel rideau entoure à distance au moins en partie, dans l'état non moussé, les régions de surfaces libres en élastomère (19).

9. Palier en élastomère-métal selon l'une quelconque des revendications 1 à 6, **caractérisé en ce que**
le palier en élastomère-métal (1) est réalisé sous forme de ressort pneumatique (22) constitué d'un palier conique (10) avec une partie conique (11) en tant que première partie de palier en métal non déformable, d'une partie de coque non déformable (12) venant en prise au moins en partie par-dessus celle-ci et d'une partie de soufflet concentrique (23), pouvant être remplie d'air comprimé, raccordée de manière étanche à l'air à la partie de coque (12), qui se compose d'une partie annulaire de paroi latérale de soufflet (24) combustible, flexible, et d'une partie de plaque de soufflet (25) non combustible, non déformable, opposée axialement à la partie conique (11), en tant que deuxième partie de palier en métal, et **en ce qu'**un rideau en HEABM en forme de cloche, constitué de HEABM plat, fermé de manière continue, et/ou fendu longitudinalement pour produire des franges (27), est connecté à la partie de plaque de soufflet (25), lequel rideau entoure au moins en partie, dans l'état non moussé, la partie annulaire de paroi latérale de soufflet (24) et les régions de surfaces libres en élastomère (19) du palier conique (10).

10. Palier en élastomère-métal selon la revendication 9, **caractérisé en ce que**
le rideau en HEABM en forme de cloche (26) est rétréci dans la région du palier conique (10) vers celui-ci et/ou
**en ce qu'**une partie annulaire en HEABM en forme de plaque (30) est connectée à la partie conique (10) au niveau d'une partie de base du cône (29) et/ou
**en ce que** dans au moins un élément en élastomère (13) est prévue au moins une tôle intermédiaire (14) avec des dépassements de tôles intermédiaires (36) et/ou des régions de partie de coque (35) qui ne sont pas recouvertes à chaque fois par un rideau relativement court en HEABM (26), et **en ce que** du HEABM (38, 38') est disposé au niveau des dépassements de tôles intermédiaires (36) et/ou des régions de partie de coque (35).

11. Palier en élastomère-métal selon la revendication 9, **caractérisé en ce que**
le rideau en forme de cloche (26) est fabriqué en matériau solide non combustible et
**en ce que** du HEABM (40) est disposé dans le rideau (26) éventuellement en association avec des tôles conductrices (41).

12. Véhicule sur rails comprenant un palier en élastomère-métal selon l'une quelconque des revendications précédentes.
